# EUROPEAN PATENT SPECIFICATION

(11) **EP 3 605 040 B1**
(45) Date of publication and mention of the grant of the patent: **06.12.2023**
(21) Application number: 18772667.4
(22) Date of filing: 16.03.2018
(51) Int. Cl.: G01J 1/02, G01J 5/10, G01J 5/06, G01J 5/08, G01J 5/00, G01J 5/16

(54) **INFRARED SENSOR**
INFRAROTSENSOR
CAPTEUR INFRAROUGE

(30) Priority: 24.03.2017 JP 2017059006
(43) Date of publication of application: 05.02.2020
(73) Proprietor: Mitsubishi Materials Corporation, Chiyoda-ku Tokyo 100-8117 (JP)
(72) Inventor: NAKAMURA Kenji, Naka-shi Ibaraki 311-0102 (JP); TARI Kazuyoshi, Saitama-shi Saitama 330-8508 (JP); HIRANO Shingo, Naka-shi Ibaraki 311-0102 (JP)
(74) Representative: Hoffmann Eitle
(86) International application number: PCT/JP2018/010586
(87) International publication number: WO 2018/173973

(56) References cited:
- EP-A1- 2 489 998
- EP-A1- 2 811 271
- WO-A1-2017/131151
- WO-A1-2017/131166
- JP-A- 2012 068 115
- JP-A- 2013 113 732
- JP-A- 2013 156 235
- JP-A- 2015 224 964
- JP-A- 2017 134 033
- US-A1- 2015 369 669

## Description

### BACKGROUND OF THE INVENTION

### [Field of the Invention]

The present invention relates to an infrared sensor suitable for measuring the temperature of a heating roller of a copying machine, a printer or the like and having excellent responsiveness.

### [Description of the Related Art]

In general, an infrared sensor that is disposed to face a measurement object such as a fixing roller used in an image forming device such as a copying machine or a printer and receives radiant heat therefrom to measure the temperature is positioned in order to measure the temperature of the measurement object.

For such an infrared sensor, in recent years, a film type infrared sensor in which a thin film thermistor is formed on an insulating film which has excellent flexibility and can make the overall structure thin has been developed.

For example, JP 2013-160635 A describes an infrared sensor which includes an insulating film, a first heat sensitive element and a second heat sensitive element which are provided to be spaced apart from each other on one surface of the insulating film, a first conductive wiring film and a second conductive wiring film which are formed on the one surface of the insulating film and are connected to the first heat sensitive element and the second heat sensitive element, respectively, and an infrared reflective film which is provided on the other surface of the insulating film to be opposite to the second heat sensitive element.

Similar sensors are shown in WO 2017/131151 A1, WO 2017/131166 A1, EP 2 811 271 A1 and EP 2 489 998 A1.

### SUMMARY OF THE INVENTION

### [Problems to be solved by the Invention]

The following problems remain in the conventional technique mentioned above.

That is, in the case of the above conventional infrared sensor, when a change in an environmental temperature occurs, for example, when the temperature on either one side of a light receiving side and a compensation side changes due to an influence of the convection of ambient air, heat easily escapes via wiring films to terminal electrodes on the side in which the temperature has changed, and thus convergence of the heat balance between the light receiving side and the compensation side is delayed, which causes a problem that the heat responsiveness is lowered.

The present invention has been made in view of the problems described above, and it is an object of the present invention to provide an infrared sensor which can accelerate convergence of the heat balance to improve the heat responsiveness.

### [Means for Solving the Problems]

The present invention adopts the following configuration in order to solve the problems. That is, an infrared sensor according to the present invention comprises an insulating film, a first heat sensitive element and a second heat sensitive element provided on one surface of the insulating film, a pair of first wirings which have one ends connected to the first heat sensitive element and are formed on the one surface of the insulating film, a pair of second wirings which have one ends connected to the second heat sensitive element and are formed on the one surface of the insulating film, a light receiving area provided on the other surface of the insulating film to be opposite to the first heat sensitive element, an infrared reflective film formed on the other surface of the insulating film to cover at least a portion immediately above the second heat sensitive element while avoiding the light receiving area, and a heat conductive film connected to the first heat sensitive element and formed by patterning on the one surface of the insulating film, wherein the heat conductive film has a thermal coupling portion close to a part of the infrared reflective film, and the thermal coupling portion is formed to be opposite to the part of the infrared reflective film.

In this infrared sensor, since the heat conductive film has the thermal coupling portion close to a part of the infrared reflective film, a change in environmental temperature can be efficiently transmitted mutually between the light receiving side and the compensation side by thermally coupling the thermal coupling portion with a part of the infrared reflective film, whereby convergence of the heat balance between the light receiving side and the compensation side is accelerated, and thus the heat responsiveness is improved. That is, since the insulating film is thin, the heat on the one surface is rapidly transmitted to the infrared reflective film on the other surface through the thermal coupling portion, and in particular, when the infrared reflective film is a metal film, it has high heat conductivity so that the heat can be transmitted mutually between the light receiving side and the compensation side to achieve rapid convergence of the heat balance.

According to the present invention, the thermal coupling portion is formed to be opposite to the part of the infrared reflective film.

That is, in this infrared sensor, since the thermal coupling portion is formed to be opposite to the part of the infrared reflective film, the thermal coupling portion can be placed closest to the part of the infrared reflective film with the thin insulating film therebetween, and thus excellent thermal coupling properties can be obtained.

An infrared sensor according to a further aspect of the present invention is characterized by the thermal coupling portion having a compensation-side-vicinity coupling portion disposed in the vicinity of the second heat sensitive element.

That is, in the infrared sensor, since the thermal coupling portion has the compensation-side-vicinity coupling portion disposed in the vicinity of the second heat sensitive element, the compensation-side-vicinity coupling portion is close to the second heat sensitive element, and thus the responsiveness is further increased.

An infrared sensor according to a further aspect of the present invention is characterized in that the infrared reflective film extends to a vicinity region of an outer edge of the insulating film, and the thermal coupling portion has an outer-edge-vicinity coupling portion close to a part of the infrared reflective film in the vicinity region.

That is, in this infrared sensor, since the thermal coupling portion has the outer-edge-vicinity coupling portion close to a part of the infrared reflective film in the vicinity region, the heat can also be transmitted by the outer-edge-vicinity coupling portion from the vicinity region near the outer edge of the insulating film.

An infrared sensor according to a furhter aspect of the present invention is characterized in that the infrared reflective film is formed to cover the perimeter of the light receiving area.

That is, in this infrared sensor, since the infrared reflective film is formed to cover the perimeter of the light receiving area, a change in environmental temperature transmitted via the thermal coupling portion can also be transmitted to the entire perimeter of the light receiving area, and thus convergence of the heat balance can be further accelerated. Therefore, the temperature gradient due to air convection between the first heat sensitive element side and the second heat sensitive element side can be reduced and the response speeds of the two heat sensitive elements can be made equal.

For example, in the case where the infrared reflective film is formed only in the region opposite to the second heat sensitive element, when air flows in from the second heat sensitive element side due to the convection of ambient air, the infrared reflective film above the second heat sensitive element gets cool to locally change the temperature of the insulating film. In contrast, in the infrared sensor of the present invention, since the infrared reflective film is formed to also cover the perimeter of the light receiving area opposite to the first heat sensitive element, the temperature around the light receiving area also decreases due to the heat conductivity of the infrared reflective film even when the area on the second heat sensitive element side cools down due to the air flow, whereby a difference in temperature hardly occurs in whole so that it is less likely to receive an influence of the convection of ambient air. In addition, since the light receiving area above the first heat sensitive element is not covered with the infrared reflective film, reception of infrared light from the measurement object is not hindered.

### [Effects of the Invention]

According to the present invention, the following effects are achieved.

That is, according to the infrared sensor of the present invention, since the heat conductive film has the thermal coupling portion close to a part of the infrared reflective film, a change in environmental temperature can be efficiently transmitted mutually between the light receiving side and the compensation side via the thermal coupling portion. Accordingly, the convergence of the heat balance between the light receiving side and the compensation side can be accelerated, and thus the heat responsiveness can be improved.

Therefore, according to the infrared sensor of the present invention, since the heat responsiveness is high, it is suitable for measuring the temperature of a heating roller of a copying machine, a printer or the like.

### BRIEF DESCRIPTION OF THE DRAWINGS

FIG. 1 is a plan view showing a first embodiment of an infrared sensor.
FIG. 2 shows a plan view (a) and a back view (b) both showing the infrared sensor in the first embodiment.
FIG. 3 is a plan view showing a state where the heat sensitive elements are removed in a second embodiment of the infrared sensor, which is in accordance with the present invention.
FIG. 4 is a plan view showing a state where the heat sensitive elements are removed in a third embodiment of the infrared sensor.

### DESCRIPTION OF THE EMBODIMENTS

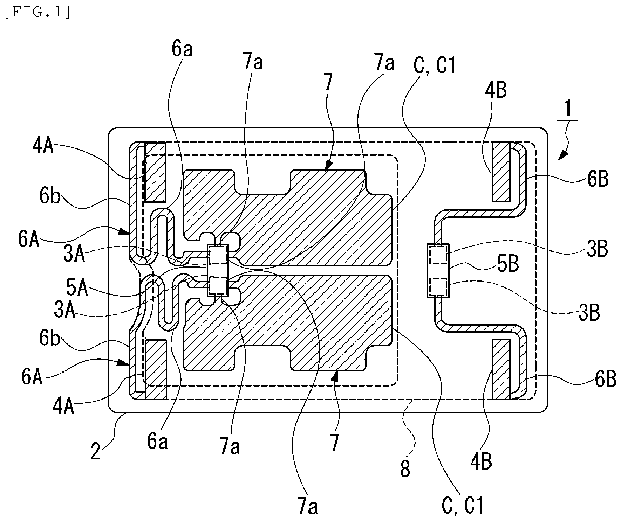

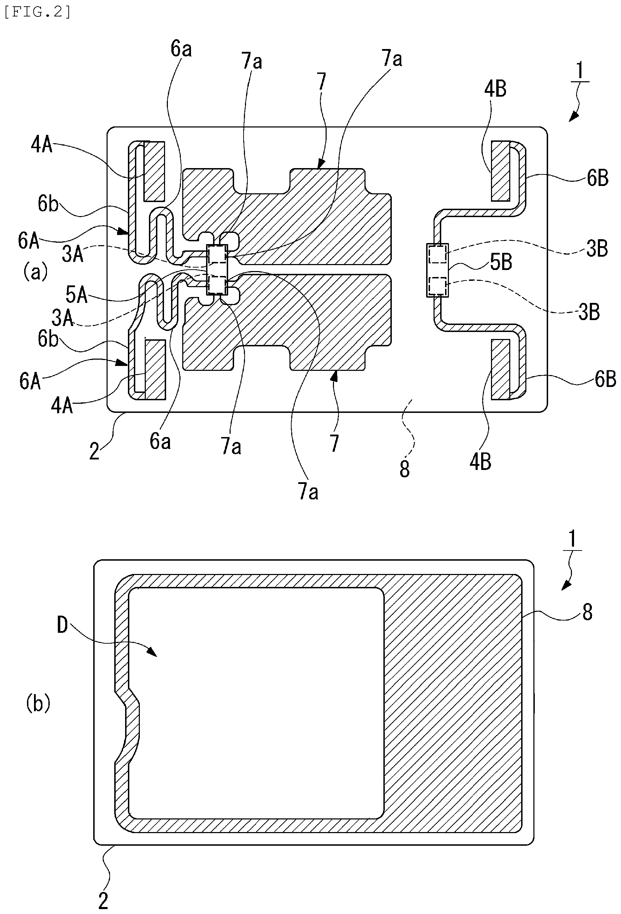

Hereinafter, a first embodiment of an infrared sensor will be described with reference to FIGS. 1 and 2.

As shown in FIGS. 1 and 2, an infrared sensor 1 of the present embodiment includes an insulating film 2, a pair of first terminal electrodes 4A and a pair of second terminal electrodes 4B which are formed by patterning on one surface (a front surface) of the insulating film 2, a first heat sensitive element 5A and a second heat sensitive element 5B which are provided on the one surface of the insulating film 2, a pair of first wirings 6A which have one ends connected to the first heat sensitive element 5A and the other ends connected to the pair of first terminal electrodes 4A and are formed by patterning on the one surface of the insulating film 2, a pair of second wirings 6B which have one ends connected to the second heat sensitive element 5B and the other ends connected to the pair of second terminal electrodes 4B and are formed by patterning on the one surface of the insulating film 2, a light receiving area D which is provided on the other surface (a surface on a light receiving side or a back surface) of the insulating film 2 to be opposite to the first heat sensitive element 5A, and an infrared reflective film 8 which is formed on the other surface of the insulating film 2 to cover at least a portion immediately above the second heat sensitive element 5B while avoiding the light receiving area D.

In addition, the infrared sensor 1 of the present embodiment includes a pair of heat conductive films 7 which are connected to a pair of first adhesive electrodes 3A separately from the first wirings 6A, and are formed in the vicinity of the first adhesive electrodes 3A on the one surface of the insulating film 2 by patterning with a thin film having a heat conductivity higher than that of the insulating film 2.

The heat conductive film 7 has a thermal coupling portion C close to a part of the infrared reflective film 8.

The pair of first wirings 6A have the pair of first adhesive electrodes 3A at one ends of which the first heat sensitive element 5A is connected. Also, the pair of second wirings 6B have a pair of second adhesive electrodes 3B at one ends of which the second heat sensitive element 5B is connected.

The thermal coupling portion C is a portion to be thermally coupled to a part of the first wirings 6A and has compensation-side-vicinity coupling portions C1 which extend to the vicinity of the second heat sensitive element 5B and are disposed in the vicinity of the second heat sensitive element 5B.

The infrared reflective film 8 is formed to also cover the perimeter of the light receiving area D.

The pair of first wirings 6A extend from the pair of first adhesive electrodes 3A in a direction opposite to the second heat sensitive element 5B side, and respectively reach the corresponding first terminal electrodes 4A via portions 6a that are folded back and forth a plurality of times to meander. As described above, since the first wirings 6A include the meandering portions 6a, thermal resistance to the first terminal electrodes 4A can be increased.

Also, the second wirings 6B extend a shorter distance as compared to the first wirings 6A and reach the second terminal electrodes 4B.

The first wirings 6A and the heat conductive films 7 are not in direct contact with each other, and are indirectly connected via the first adhesive electrodes 3A.

The heat conductive films 7 are formed to have larger areas than those of the first wirings 6A.

The pair of heat conductive films 7 respectively extend toward the second heat sensitive element 5B side, and form the compensation-side-vicinity coupling portions C1 having end portions on the second heat sensitive element 5B side, which reach the vicinity of the infrared reflective film 8.

Note that, if the thermal resistance of the compensation-side-vicinity coupling portions C1 are much larger than the thermal resistance of portions of the first wirings 6A disposed at a detecting side end portion of the insulating film 2, that is, extension portions 6b extending from the meandering portions 6a to the first terminal electrodes 4A, a heat flow from the extension portions 6b to the first terminal electrodes 4A becomes dominant. In contrast, if the thermal resistance of the compensation-side-vicinity coupling portions C1 are smaller than or equal to twice the thermal resistance of the extension portions 6b, a favorable heat flow from the compensation-side-vicinity coupling portions C1 toward the infrared reflective film 8 can be obtained, and thus a high speed stabilization of the heat balance can be achieved. Therefore, in order to obtain a good thermal coupling between the compensation-side-vicinity coupling portions C1 and the infrared reflective film 8, it is desirable to set the condition to "thermal resistance of compensation-side-vicinity coupling portion C1≦thermal resistance of extension portion 6b×2." For example, in the present embodiment, as a ratio of the heat resistance (=a heat transfer distance of a heat transfer path/(cross-sectional area×heat conductivity)) calculated from the heat conductivity, thickness, width, and length of each portion, that for the extension portion 6b is set to 1, while that for the compensation-side-vicinity coupling portion C1 is set to about 1 (equal level).

In addition, portions of the heat conductive films 7 connected to the first adhesive electrodes 3A and portions of the first wirings 6A connected to the first adhesive electrodes 3A are set separately.

Terminal electrodes of the first heat sensitive element 5A and second heat sensitive element 5B are bonded to the corresponding first adhesive electrodes 3A and the second adhesive electrodes 3B, respectively, with a conductive adhesive such as solder.

The heat conductive film 7 is partially connected to two of four sides of the first adhesive electrode 3A having a square shape via constricted portions 7a.

In addition, since the constricted portions 7a are formed in portions of the heat conductive film 7 connected to the first terminal electrode 4A, the constricted portions 7a function as thermal lands so that occurrence of a solder failure in which the heat excessively escapes to the surroundings during soldering to make the solder difficult to melt can be inhibited.

In the present embodiment, the first heat sensitive element 5A disposed immediately below an infrared light receiving surface is used as an infrared detecting element, and the second heat sensitive element 5B disposed immediately below the infrared reflective film 8 is used as a compensating element.

In addition, in FIG. 1, the infrared reflective film 8 on the back surface side is shown with a broken line. Also, in (a) and (b) of FIG. 2, each terminal electrode, each wiring, the heat conductive films 7 and the infrared reflective film 8 are shown by hatching.

The insulating film 2 is formed in a substantially rectangular shape with a polyimide resin sheet, and the infrared reflective film 8, each wire, each terminal electrode, each adhesive electrode, and the heat conductive films 7 are formed of copper foil. That is, these are produced by a double-sided flexible substrate in which the infrared reflective film 8, each wire, each terminal electrode, each adhesive electrode, and the heat conductive films 7 are formed by patterning with copper foil on both sides of a polyimide substrate serving as the insulating film 2.

The pair of first terminal electrodes 4A and the pair of second terminal electrodes 4B are disposed around corner portions of the insulating film 2.

The infrared reflective film 8 is formed of the copper foil mentioned above and a gold plating film laminated on the copper foil.

The infrared reflective film 8 is formed of a material having an infrared reflectance rate higher than that of the insulating film 2 and is formed by applying the gold plating film on the copper foil as described above. Also, in addition to the gold plating film, for example, an aluminum deposition film with a mirror surface, an aluminum foil or the like may be used.

The first heat sensitive element 5A and the second heat sensitive element 5B are chip thermistors having terminal electrodes (not shown) formed at both end portions thereof. The thermistors can be NTC type, PTC type or CTR type thermistors, and, in the present embodiment, for example, NTC type thermistors are adopted as the first heat sensitive element 5A and the second heat sensitive element 5B. The thermistors are formed of a thermistor material such as a Mn-Co-Cu based material or a Mn-Co-Fe based material.

As described above, in the infrared sensor 1 of the present embodiment, since the heat conductive film 7 has the thermal coupling portion C close to a part of the infrared reflective film 8, a change in environmental temperature can be efficiently transmitted mutually between the light receiving side and the compensation side by thermally coupling the thermal coupling portion C with a part of the infrared reflective film 8, whereby convergence of the heat balance between the light receiving side and the compensation side is accelerated, and thus the heat responsiveness is improved. That is, since the insulating film 2 is thin, the heat on the one surface is rapidly transmitted to the infrared reflective film 8 on the other surface through the thermal coupling portion C, and in particular, when the infrared reflective film 8 is a metal film, it has high heat conductivity so that the heat can be transmitted mutually between the light receiving side and the compensation side to achieve a rapid convergence of the heat balance.

In addition, since the thermal coupling portion C has the compensation-side-vicinity coupling portion C1 disposed in the vicinity of the second heat sensitive element 5B, the compensation-side-vicinity coupling portion C1 is placed close to the second heat sensitive element 5B, and thus the responsiveness is further increased.

Further, since the infrared reflective film 8 is formed to cover the perimeter of the light receiving area D, a change in environmental temperature transmitted via the thermal coupling portion C is also transmitted to the entire perimeter of the light receiving area D, and thus the convergence of the heat balance can be further accelerated. Therefore, the temperature gradient due to air convection between the first heat sensitive element 5A side and the second heat sensitive element 5B side can be reduced and the response speeds of the two heat sensitive elements can be made equal.

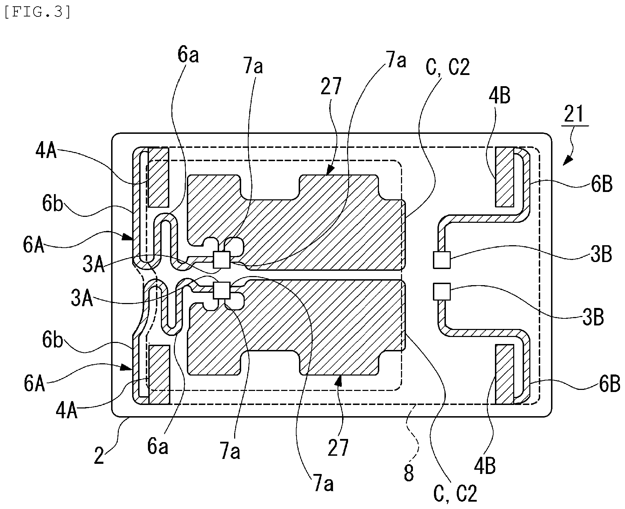

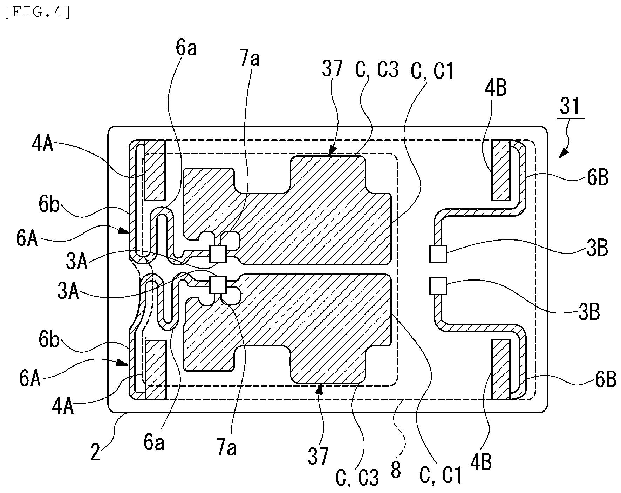

Next, second and third embodiments of the infrared sensor, of which the second embodiment is in accordance with the present invention, will be described below with reference to FIGS. 3 and 4. In the following description of each embodiment, components the same as those described in the above embodiment are denoted by the same reference numerals, and description thereof will be omitted. In addition, in FIGS. 3 and 4, the infrared reflective film 8 formed in the other surface of the insulating film 2 is shown with a broken line.

A difference between the second embodiment and the first embodiment is that the compensation-side-vicinity coupling portion C1 of the thermal coupling portion C in the first embodiment is in the vicinity of the infrared reflective film 8 and is slightly spaced apart therefrom in a planar direction, while a compensation-side-vicinity coupling portion C2 of a thermal coupling portion C in an infrared sensor 21 of the second embodiment is formed to be opposed to a part of the infrared reflective film 8, as shown in FIG. 3.

That is, in the second embodiment, heat conductive films 27 extend toward the second heat sensitive element 5B side more than in the first embodiment, and end portions thereof on the second heat sensitive element 5B side reach a position immediately below the infrared reflective film 8 to form the compensation-side-vicinity coupling portion C2.

As described above, in the infrared sensor 21 of the second embodiment, since the compensation-side-vicinity coupling portion C2 of the thermal coupling portion C is formed to be opposite to a part of the infrared reflective film 8, the compensation-side-vicinity coupling portion C2 is the closest to the part of the infrared reflective film 8 via the thin insulating film 2 so that excellent thermal coupling properties can be obtained.

Next, a difference between the third embodiment and the first embodiment is that the thermal coupling portion C in the first embodiment is only the pair of compensation-side-vicinity coupling portions C1, while the thermal coupling portion C of the infrared sensor 31 in the third embodiment includes not only the pair of compensation-side-vicinity coupling portions C1 but also a pair of outer-edge-vicinity coupling portions C3 which are close to a part of the infrared reflective film 8 disposed at a vicinity region near an outer edge of the insulating film 2, as shown in FIG. 4.

That is, in the third embodiment, a part of a heat conductive films 37 extend close to portions of the infrared reflective film 8, which extends in a band shape surrounding the light receiving area D, in the vicinity of a pair of long sides of the insulating film 2, and its end portions form the outer-edge-vicinity coupling portions C3.

Thus, in the infrared sensor 31 of the third embodiment, since the thermal coupling portion C has the outer-edge-vicinity coupling portions C3 close to portions of the infrared reflective film 8 in the vicinal region, heat can also be transmitted from the vicinal region near the outer edge of the insulating film 2 via the outer-edge-vicinity coupling portions C3.

Further, since the thermal coupling portion C includes the pair of compensation-side-vicinity coupling portions C1 and the pair of outer-edge-vicinity coupling portions C3, the thermal coupling can be achieved at more places than in the first embodiment.

In addition, as in the second embodiment, the compensation-side-vicinity coupling portions C1 and the outer-edge-vicinity coupling portions C3 may be further extended to be opposed to a part of the infrared reflective film 8.

The technical scope of the present invention is not limited to the above embodiments, and various modifications can be made without departing from the scope of the present invention, as defined by the claims.

For example, in the above embodiments, the first heat sensitive element detects the heat conducted from the insulating film which has absorbed infrared rays directly, but an infrared absorbing film having an infrared absorptivity higher than that of the insulating film may be formed immediately above the first heat sensitive element on one surface of the insulating film. In this case, the infrared absorption effect in the first heat sensitive element is further improved, and thus a more favorable temperature difference between the first heat sensitive element and the second heat sensitive element can be obtained. That is, the infrared absorbing film may be configured to absorb infrared rays radiated from a measurement object and cause heat conduction from the infrared ray absorbing film, which has absorbed infrared rays to generate heat, via the insulating film to change the temperature of the first heat sensitive element immediately below the infrared absorbing film.

### [Reference Numerals]

1, 21, 31: infrared sensor, 2: insulating film, 3A: first adhesive electrode, 3B: second adhesive electrode, 4A: first terminal electrode, 4B: second terminal electrode, 5A: first heat sensitive element, 5B: second heat sensitive element, 6A: first wiring, 6B: second wiring, 7, 27, 37: heat conductive film, 8: infrared reflective film, C: thermal coupling portion, C1, C2: compensation-side-vicinity coupling portion, C3: outer-edge-vicinity coupling portion, D: light receiving area

## Claims

1. An infrared sensor comprising:
an insulating film (2)
a first heat sensitive element (5A) and a second heat sensitive element (5B) which are provided on one surface of the insulating film;
a pair of first wirings (6A) which have one ends connected to the first heat sensitive element and are formed on the one surface of the insulating film;
a pair of second wirings (6B) which have one ends connected to the second heat sensitive element and are formed on the one surface of the insulating film;
a light receiving area (D) provided on the other surface of the insulating film to be opposite to the first heat sensitive element;
an infrared reflective film (8) formed on the other surface of the insulating film to cover at least a portion immediately above the second heat sensitive element while avoiding the light receiving area; and
a heat conductive film (7) connected to the first heat sensitive element and formed by patterning on the one surface of the insulating film,
wherein the heat conductive film has a thermal coupling portion (C, C2, C3) close to a part of the infrared reflective film, and
the thermal coupling portion is formed to be opposite to the part of the infrared reflective film.

2. The infrared sensor according to claim 1, wherein the thermal coupling portion has a compensation-side-vicinity coupling portion (C2) disposed in the vicinity of the second heat sensitive element.

3. The infrared sensor according to claim 1,
wherein the infrared reflective film extends to a vicinity region near an outer edge of the insulating film, and
the thermal coupling portion has an outer-edge-vicinity coupling portion (C3) close to a part of the infrared reflective film in the vicinity region.

4. The infrared sensor according to claim 1,
wherein the infrared reflective film is formed to cover the perimeter of the light receiving area.

## Patentansprüche

1. Infrarotsensor, umfassend:
eine isolierende Folie (2),
ein erstes wärmeempfindliches Element (5A)
und ein zweites wärmeempfindliches Element (5B),
die auf einer Fläche der isolierenden Folie bereitgestellt sind;
ein Paar von ersten Verdrahtungen (6A), deren eine Enden mit dem ersten wärmeempfindlichen Element verbunden sind und die auf der einen Fläche der isolierenden Folie gebildet sind;
ein Paar von zweiten Verdrahtungen (6B), deren eine Enden mit dem zweiten wärmeempfindlichen Element verbunden sind und die auf der einen Fläche der isolierenden Folie gebildet sind;
einen Lichtempfangsbereich (D), der auf der anderen Fläche der isolierenden Folie bereitgestellt ist, um sich gegenüber dem ersten wärmeempfindlichen Element zu befinden;
eine infrarotreflektierende Folie (8), die auf der anderen Fläche der isolierenden Folie gebildet ist, um mindestens einen Abschnitt unmittelbar über dem zweiten wärmeempfindlichen Element zu bedecken, während der Lichtempfangsbereich gemieden wird; und
eine wärmeleitende Folie (7), die mit dem ersten wärmeempfindlichen Element verbunden ist und durch Strukturieren auf der einen Fläche der isolierenden Folie gebildet ist,
wobei die wärmeleitende Folie einen thermischen Kopplungsabschnitt (C, C2, C3) nahe einem Teil der infrarotreflektierenden Folie aufweist und
der thermische Kopplungsabschnitt gebildet ist, um sich gegenüber dem Teil der infrarotreflektierenden Folie zu befinden.

2. Infrarotsensor nach Anspruch 1,
wobei der thermische Kopplungsabschnitt einen Kopplungsabschnitt (C2) in einer Umgebung einer Kompensationsseite aufweist, der in der Umgebung des zweiten wärmeempfindlichen Elements angeordnet ist.

3. Infrarotsensor nach Anspruch 1,
wobei sich die infrarotreflektierende Folie bis zu einer Umgebungsregion in der Nähe einer Außenkante der isolierenden Folie erstreckt und
der thermische Kopplungsabschnitt einen Kopplungsabschnitt (C3) in einer Umgebung der Außenkante nahe einem Teil der infrarotreflektierenden Folie in der Umgebungsregion aufweist.

4. Infrarotsensor nach Anspruch 1,
wobei die infrarotreflektierende Folie gebildet ist, um den Umfang des Lichtempfangsbereichs zu bedecken.

## Revendications

1. Capteur infrarouge comprenant :
un film isolant (2)
un premier élément sensible à la chaleur (5A)
et un deuxième élément sensible à la chaleur (5B)
qui sont disposés sur une surface du film isolant ;
une paire de premiers câblages (6A) qui présentent une extrémité connectée au premier élément sensible à la chaleur et qui sont formés sur la une surface du film isolant ;
une paire de deuxièmes câblages (6B) qui présentent une extrémité connectée au deuxième élément sensible à la chaleur et qui sont formés sur la une surface du film isolant ;
une zone de réception de lumière (D) prévue sur l'autre surface du film isolant pour être opposée au premier élément sensible à la chaleur ;
un film réfléchissant les infrarouges (8) formé sur l'autre surface du film isolant pour recouvrir au moins une partie immédiatement au-dessus du deuxième élément sensible à la chaleur tout en évitant la zone de réception de lumière ; et
un film conducteur de chaleur (7) relié au premier élément sensible à la chaleur et formé sous la forme d'un motif sur la une surface du film isolant,
dans lequel le film conducteur de chaleur présente une partie de couplage thermique (C, C2, C3) proche d'une partie du film réfléchissant les infrarouges, et
la partie de couplage thermique est formée pour être opposée à la partie du film réfléchissant les infrarouges.

2. Capteur infrarouge selon la revendication 1,
dans lequel la partie de couplage thermique présente une partie de couplage au voisinage du côté compensation (C2) disposée au voisinage du deuxième élément sensible à la chaleur.

3. Capteur infrarouge selon la revendication 1,
dans lequel le film réfléchissant les infrarouges s'étend jusqu'à une région voisine proche d'un bord externe du film isolant, et
la partie de couplage thermique présente une partie de couplage au voisinage du bord externe (C3) proche d'une partie du film réfléchissant les infrarouges dans la région voisine.

4. Capteur infrarouge selon la revendication 1,
dans lequel le film réfléchissant les infrarouges est formé pour couvrir le périmètre de la zone de réception de lumière.
